# EUROPÄISCHE PATENTSCHRIFT

(11) **EP 1 658 576 B1**
(45) Veröffentlichungstag und Bekanntmachung des Hinweises auf die Patenterteilung: **19.08.2009**
(21) Anmeldenummer: 04764624.5
(22) Anmeldetag: 30.08.2004
(51) Int. Cl.: G06K 7/00, G06K 13/08

(54) **SMART CARD CONNECTOR MIT ABGEDICHTETER SCHUBLADE**
SMART CARD CONNECTOR COMPRISING A SEALED DRAWER
CONNECTEUR DE CARTE A PUCE A TIROIR ETANCHE

(30) Priorität: 29.08.2003 DE 10339931
(43) Veröffentlichungstag der Anmeldung: 24.05.2006
(73) Patentinhaber: Amphenol-Tuchel Electronics GmbH, 74080 Heilbronn (DE)
(72) Erfinder: BERTSCH, Michael, Steffen, 74078 Heilbronn (DE); MAITERTH, Eduard, c/oAmphenol-Tuchel Electro. GmbH, 74080 Heilbronn (DE); BAUMANN, Anja, Irene, 74078 Heilbronn (DE)
(74) Vertreter: Emde, Eric
(86) Internationale Anmeldenummer: PCT/EP2004/009658
(87) Internationale Veröffentlichungsnummer: WO 2005/034016

(56) Entgegenhaltungen:
- US-A- 5 336 877
- US-A- 5 402 095
- US-A1- 2001 014 055

## Beschreibung

Die Erfindung bezieht sich auf einen Smart Card Connector mit einem Gehäuse und einer darin hin- und herbewegbar aufgenommenen Schublade, die dazu geeignet ist, eine Smart Card (im folgenden kurz "Karte" genannt) aufzunehmen, so dass dann, wenn sich die Schublade und die Karte im ins Gehäuse eingesetzten Zustand befindet, die vom Gehäuse getragenen Kontakte mit den Kontakten der Karte in Eingriff kommen.

Bei herkömmlichen Smart Card Connectoren der eingangs genannten Art kann es leicht passieren, dass Fremdstoffe in den Innenraum des Smart Card Connectors eindringen. Auch ist es möglich, dass ein unzulässiger Zugriff auf die eingesetzte Karte erfolgt, wodurch Betriebsstörungen hervorgerufen werden.

Ferner sind bekannte Smart Card Connector von relativ kompliziertem Aufbau und machen zahlreiche Einzelteile erforderlich. Schließlich tritt ein Nachteil bei vielen Smart Card Connectoren bekannter Bauart insofern auf, als durch das mögliche zu weite Herausziehen der Schublade Beschädigungen auftreten können. Speziell sei zum Stand der Technik auf die DE 19703007 hingewiesen, die die Grundlage für den Oberbegriff des Anspruchs 1 bildet.

In der US Patentschrift 5 402 095 A ist ein Kartenleser gezeigt, bei dem eine untere Gehäusehälfte zusammen mit einer oberen Gehäusehälfte das Gehäuse bildet. Zwischen den Gehäusehälften ist eine eine elektronische Schaltung tragende Platte zur Erfassung der in einer Karte enthaltenen Daten angeordnet. Die Karte C kann innerhalb des Gehäuses mittels einer in Form eines Rahmens gebildeten Zugvorrichtung, bestehend aus zwei symmetrischen Schenkeln und einem Querteil, angeordnet werden. Der die freien Enden der Schenkel verbindende Querteil bildet eine seitliche Stirnfläche für eine leckdichte Abschließung des Einsetzfensters für die Karte in das Gehäuse.

Erfindungsgemäß wird bei einem Smart Card Connector mit einem stationär an einem Gerät anbringbaren Gehäuse sowie mit einer eine Smart Card aufnehmenden im Gehäuse gleitend hin und her bewegbaren Schublade 12, die zwischen einem offenen und einem geschlossenen Zustand hin und her bewegbar ist, an der Schublade eine Dichtung angebracht, die gegenüber dem Gehäuse eine Abdichtung vorsieht.

Erfindungsgemäß wird ein Smart Card Connector gemäß Anspruch 1 vorgesehen. Bevorzugte Ausgestaltungen ergeben sich aus den Unteransprüchen.

Der erfindungsgemäße Smart Card Connector besitzt im geschlossenen Zustand eine dichte Frontblende, so dass keine Fremdstoffe in den Connector eintreten können. Ferner ist die Karte im geöffneten Zustand des Smart Card Connectors in der Schublade federbelastet und kann leicht durch Anheben über eine Aussparung am Boden der Schublade soweit ausgeworfen werden, dass sie mit den Fingern aus der Schublade entnommen werden kann. Gemäß einer bevorzugten Ausgestaltung der Erfindung ist der Öffnungsweg der Schublade bezüglich des Gehäuses des Smart Card Connectors begrenzt und zwar durch einen Puffer, der vorzugsweise in Verbindung mit der umlaufenden Dichtung der Frontblende hergestellt wird.

Weitere Vorteile, Ziele und Einzelheiten der Erfindung ergeben sich aus der Beschreibung eines Ausführungsbeispiels anhand der Zeichnung; in der Zeichnung zeigt:
- Fig. 1: eine Draufsicht auf die Unterseite eines ersten Ausführungsbeispiels eines Smart Card Connectors mit abgedichteter in ihrem geschlossenen Zustand sich befindende Schublade, wobei nur ein Teil, d. h. etwas mehr als die Hälfte, des Connectors dargestellt ist, dessen fehlende Teile, was die vorliegende Erfindung anlangt, symmetrisch zur Mittellinie liegend zu denken sind;
- Fig. 2: einen Schnitt längs Linie 2-2 in Fig. 1;
- Fig. 3: eine Vergrößerung des linken Teils der Fig. 2;
- Fig. 4: eine Vergrößerung des rechten Teils der Fig. 2;
- Fig. 5: eine Darstellung ähnlich Fig. 1, wobei hier der offene Zustand des Smart Card Connnectors dargestellt ist;
- Fig. 6: einen Schnitt längs Linie 6-6 in Fig. 5, wobei man erkennt, dass die Smart Card noch nicht aus dem Smart Card Connector entnommen wurde;
- Fig. 7: eine Vergrößerung des linken Teils der Fig. 6;
- Fig. 8: eine Vergrößerung des rechten Teils der Fig. 6;
- Fig. 9: ebenfalls den offenen Zustand ähnlich wie in Fig. 5, wobei aber hier die Smart Card im Verlaufe ihres Herausnehmens (oder Einsetzens) dargestellt ist, so dass sich eine noch zu beschreibende die Smart Card in deren eingesetzten Position vorspannende Feder 13 entspannt hat (oder entspannt ist);
- Fig. 10: einen Schnitt längs Linie 10-10 in Fig. 9;
- Fig. 11: eine Vergrößerung des linken Teils der Fig. 10;
- Fig. 12: eine Vergrößerung des rechten Teils der Fig. 10;
- Fig. 13: eine außerordentlich schematisch perspektivische Ansicht wesentlicher Elemente des erfindungsgemäßen Ausführungsbeispiels des im Detail in den Fig. 1 bis 12 dargestellten Smart Card Connectors.

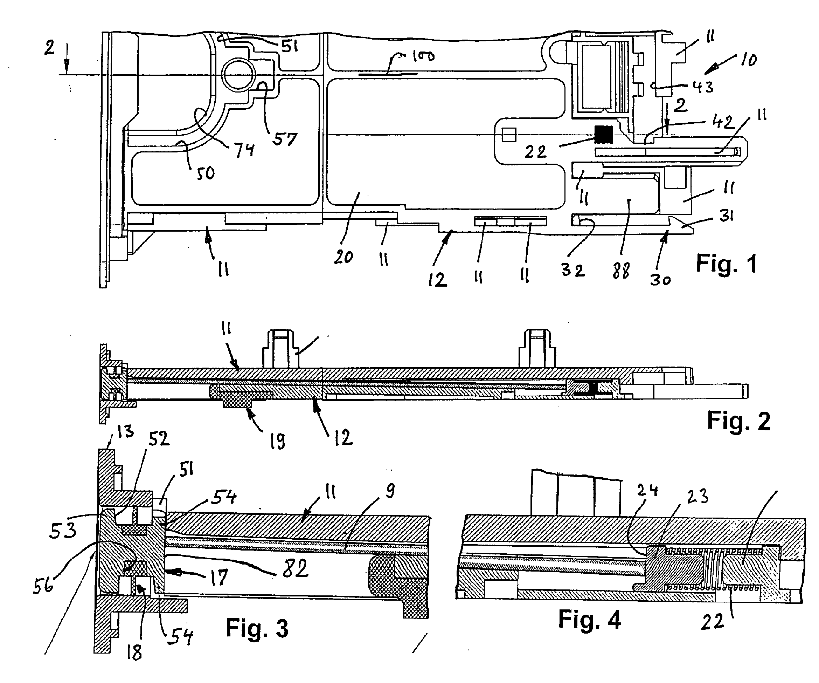

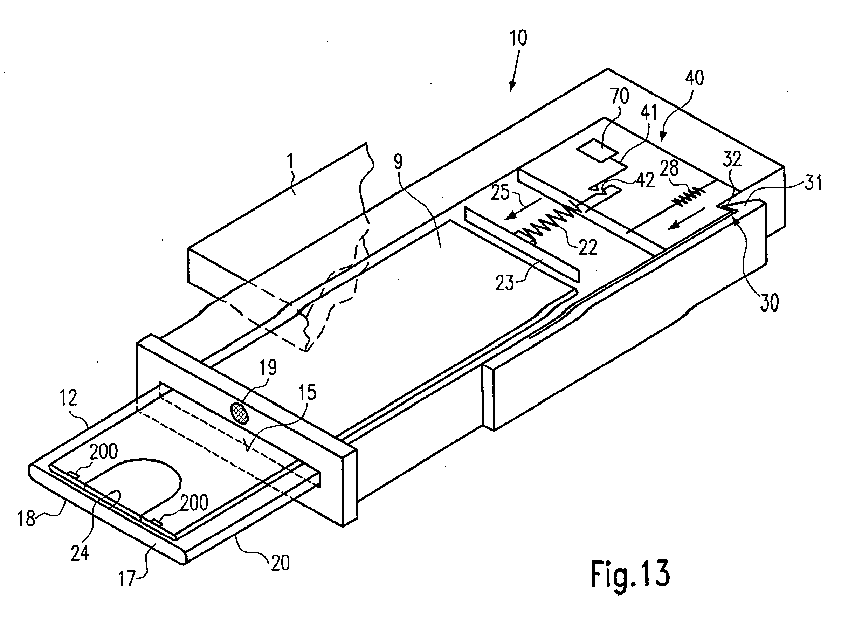

Bevor auf die detaillierten Darstellungen der Fig. 1 bis 12 eingegangen wird, sei anhand der Fig. 13 ein Überblick über den eine Smart Card (im folgenden auch kurz "Karte" genannt) 9 aufnehmenden zusammen mit einem Gerät 1 zu verwendenden Smart Card Connector (im folgenden auch kurz "Connector" genannt) 10 gegeben. Der Connector 10 wird im allgemeinen zusammen mit dem die Daten der Karte 9 benötigenden Gerät 1 verwendet und wird dazu im allgemeinen in das Gerät 1 eingebaut oder angebaut.

Der Connector 10 weist ein Gehäuse 11 auf, welches beispielsweise am Gerät 1 befestigt ist. Das Gehäuse 11 kann, wie in Fig. 1 bis 12 dargestellt, plattenförmig sein und lediglich gewisse seitlich angeordnete Führungsteile besitzen. Bei der Beschreibung des bevorzugten Ausführungsbeispiels der Fig. 1 bis 12 wird daher das Gehäuse 11 als Gehäuseplatte 11 bezeichnet.

Gleitend hin- und herbewegbar ist im Gehäuse 11 (bzw. an der Gehäuseplatte 11) eine Schublade 12 gelagert, die zur Aufnahme der Smart Card 9 dient.

Benachbart zum vorderen Ende des Connectors 10 (vgl. Fig. 13), dort wo die Schublade 12 aus dem Smart Card Connector 10 herausragt, ist vorzugsweise ein gesondertes als Gehäusefront 13 bezeichnetes Bauteil vorgesehen. Die Gehäusefront 13 besitzt eine Öffnung in der Form eines Einführschlitzes 15, durch den die Schublade 12 verläuft. Die Schublade 12 ihrerseits ist mit einer Frontblende 17 an ihrer Vorderseite ausgestattet. In der Frontblende 17 ist eine umlaufende, vorzugsweise aus Gummi bestehende Dichtung (Dichtmittel) 18 angeordnet und zwar vorzugsweise eingespritzt.

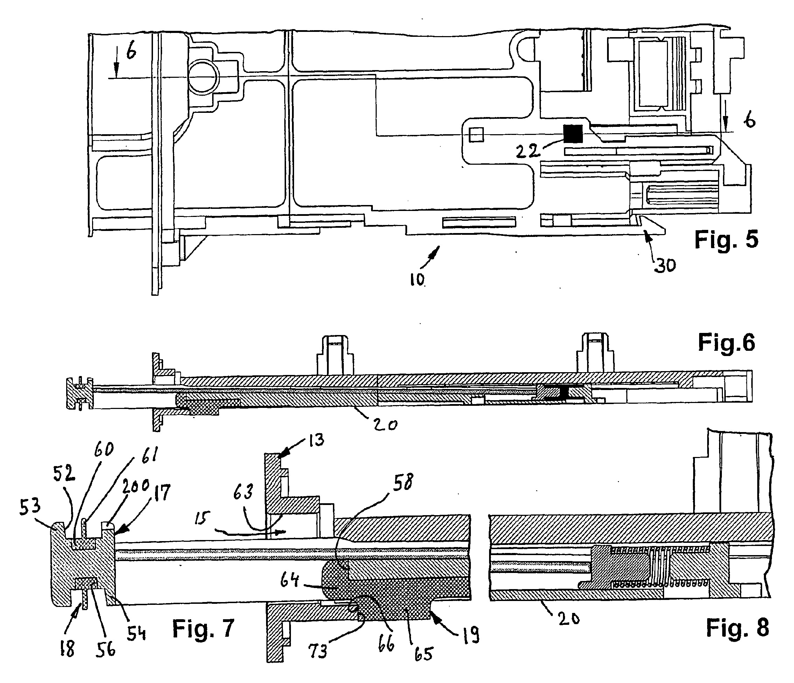

Insbesondere im Zusammenhang mit der Ausbildung der Dichtung 18 in der Frontblende 17 der Schublade 12 wird ebenfalls in der Schublade 12, und zwar an deren Unterseite 20, ein in Fig. 13 nur außerordentlich schematisch angedeuteter Puffer 19 ausgebildet, der (vgl. dazu Fig. 7) zusammen mit einer Anschlagfläche 73 an der Gehäusefront 13 den Öffnungsweg der Schublade 12 begrenzt und am Ende des Öffnungswegs dämpft. Die Anordnung des Puffers 19 ist im einzelnen beispielweise der Fig. 7 und den Fig. 1 und 2 zu entnehmen.

In der Schublade 12 sind Kartenvorspannfedermittel 22 angeordnet, die über ein Kartenanlageelement 23 die in die Schublade 12 eingesetzte Smart Card 9 gegen eine Kartenanlagefläche 24 ausgebildet an der Frontblende 17 in Richtung des Pfeils 25 drückt.

Ferner sind sich an dem Gehäuse 11 abstützende Schubladenvorspannfedermittel 28 vorgesehen, welche die Schublade 12 in Richtung des Pfeils 29 in den offenen Zustand (Öffnungsstellung) vorspannen. Öffnungsstellungsaritiermittel 30, die einen Haken 31 an der Schublade 12 und eine mit dem Haken 31 zusammenarbeitende Hakenanlage 32 an dem Gehäuse 11 aufweisen, sind ebenfalls vorgesehen.

Die Beschreibung der Fig. 13 abschließend sei noch bemerkt, dass die Schublade 12 diese am Gehäuse 11 in dem geschlossenen Zustand (Schließzustand) festlegende Schließstellungsrastmittel 40 aufweist, die beispielsweise durch einen Elektromagneten lösbar sind. Die Schließstellungsrastmittel 40 weisen vorzugsweise einen am Gehäuse 11 verschiebbar gelagerten und elektromagnetisch betätigbaren Rastschieber 41 auf, der mit einer an der Schublade 12 ausgebildeten Rastausnehmung 42 in und außer Eingriff kommen kann.

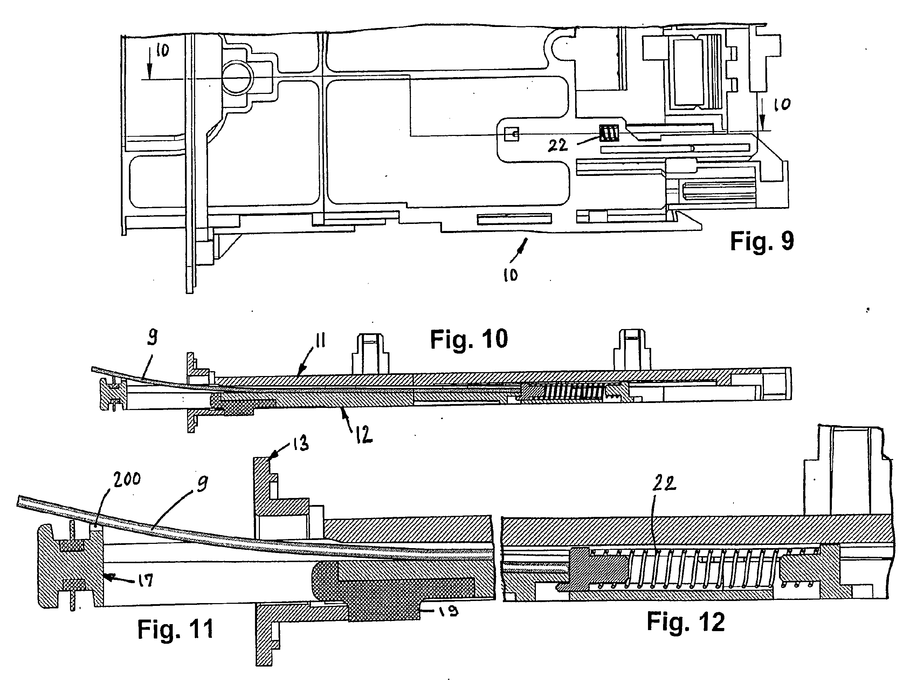

Wie bereits oben kurz erwähnt, zeigen die Fig. 1 bis 4 den Smart Card Connector 10, und zwar in Fig. 1 weitgehend nur die Unterseite 20 der Schublade 12 sowie in Fig. 2 bis 4 mehrere Schnittansichten, und zwar alles in seinem geschlossenen Zustand (Schließposition), in den Fig. 5 bis 8 in seinem offenen Zustand (Öffnungsposition), ohne dass die Karte 9 entnommen ist, und in den Fig. 9 bis 12 ebenfalls in einem offenen Zustand (Öffnungsposition), wobei die Karte 9 gerade entnommen wird. Die Darstellung der Fig. 9 bis 12 könnte auch den Fall darstellen, wo die Karte 9 gerade in die Schublade eingesetzt wird, um dann zusammen mit der Schublade 12 in den geschlossenen Zustand (Schließposition) gemäß den Fig. 1 bis 4 verschoben zu werden.

Ein wichtiges Merkmal des erfindungsgemäßen Connectors 10 ist in Fig. 3 dargestellt, wo man erkennt, dass im geschlossenen Zustand die Karte 9 manipulationssicher im Connector 10 untergebracht ist und nicht entnommen werden kann. Erst wenn, beispielsweise durch Betätigung eines Elektromagneten 70 (Fig. 13), die Schließstellungsrastmittel 40 gelöst werden, kann die Schublade 12 durch die Schubladenvorspannfedermittel 28 in den offenen Zustand bewegt werden. Es sei darauf hingewiesen, dass Fig. 1 die Rastausnehmung 42 ausgebildet an einer stegförmigen Verlängerung der Schublade 12 zeigt, wobei aber der Rastschieber 41 nicht dargestellt ist, aber auf der an der Gehäuseplatte 11 ausgebildeten Gleitfläche 43 verschieblich angeordnet zu denken ist.

Wie in Fig. 3 gezeigt, ist die Schublade 12 gegenüber dem Geräteäußeren abgedichtet. Im dargestellten bevorzugten Ausführungsbeispiel ist die Dichtung 18, wie schon erwähnt, eine umlaufende Dichtung 18 und diese wiederum ist vorzugsweise in der vorzugsweise einstückig mit der Schublade 12 ausgebildeten Frontblende 17 untergebracht. Die Dichtung 18 sieht eine insbesondere linienförmige Abdichtung gegenüber der Gehäusefront 13 vor. Die Gehäusefront 13 kann beispielsweise stationär in dem Gerät 1 vorgesehen sein, in das der Smart Card Connector 10 eingebaut werden soll. Es ist auch denkbar, dass ein der Gehäusefront 13 entsprechendes Bauteil am Gehäuse 11 bzw. der Gehäuseplatte 11 befestigt ist oder zusammen mit der Gehäuseplatte 11 durch Spritzguss hergestellt ist. Ferner ist denkbar, dass die Dichtung 18 an der Gehäusefront 13 angeordnet ist und mit einer mit der Schublade 12 ausgebildeten Frontblende 17 oder irgendeinem anderen Teil daran zusammenwirkt.

Die z. B. in Fig. 3 veranschaulichte Ausbildungsform wird bevorzugt. Bei dem in den Fig. 1 bis 12 gezeigten Ausführungsbeispiel ist die Dichtung 18, wie schon betont, eine umlaufende Dichtung, die, wie in Fig. 3 gezeigt, um die Oberseite und die Unterseite herumläuft, die aber auch, wie andeutungsweise in Fig. 13 gezeigt ist, um die beiden schmäleren Seiten der Frontblende 17 herumläuft. Bevorzugterweise ist die Dichtung 18 unverlierbar in die Frontblende 17 eingespritzt. Dieses Einspritzen wird vorzugsweise gleichzeitig mit dem Spritzen mit der Frontblende 17 vorgenommen. Vorzugsweise ist die Frontblende 17 einstückig mit der Schublade 12 durch Spritzen aus Kunststoff hergestellt.

Um die Dichtung 18 zusammen mit dem Spritzvorgang der Frontblende 17 herstellen zu können, sind in der Unterseite 20 der Schublade 12 bogenförmige Kanäle 50, 51 eingelassen, die - vgl. dazu Fig. 3 - an einer Ausnehmung 52 enden, die durch Stege 53, 54 der Frontblende 17 gebildet wird. Im Boden der Ausnehmung 52 befindet sich ferner eine ebenfalls umlaufende Vertiefung 56, in der die Dichtung 18, die vorzugsweise aus Weichgummi besteht, verankert ist.

Die Dichtung 18 - vgl. dazu Fig. 7 - besitzt einen in die Vertiefung 56 eingespritzten Verankerungsteil 60, von dem mittig eine Dichtlippe 61 senkrecht wegsteht, die mit einer in der Öffnung 15 der Gehäusefront 13 umlaufend ausgebildeten Dichtfläche 63 zusammenarbeitet.

Vorzugsweise gleichzeitig mit der Ausbildung der Dichtung 18 wird der bereits erwähnte Puffer 19 ausgebildet, der im einzelnen in Fig. 7 gezeigt ist und im Bereich einer zentralen mit den Kanälen 50, 51 verbundenen Spritzvertiefung 57 an der Unterseite 20 der Schublade 12 ausgeformt ist. Der Puffer 19 ist an der zentralen Spritzvertiefung 57 und insgesamt an der Unterseite 20 der Schublade 12 beispielsweise auch an der in Fig. 7 gezeigten Anlagefläche 58 der Schublade 12 verankert. Von einem mit 64 in Fig. 7 bezeichneten Verankerungsteil des Puffers 19 erstreckt sich in etwa mittig ein Anschlag- bzw. Dämpfungsteil 65 nach unten. Dieser Anschlagteil 65 besitzt eine Anschlagfläche 66, die in der in Fig. 7 gezeigten Öffnungsposition des Connectors 10 bzw. der Schublade 12 an einer Anschlagfläche 73 der Gehäusefront 13 anliegt.

Die Schublade 12 ist somit in dieser Öffnungsposition bezüglich ihres Öffnungsweges begrenzt, da der Puffer 19 in der beschriebenen Weise an der Gehäusefront 13 zum Anschlag kommt. Wie man in Fig. 5 erkennt, ist in der dargestellten Öffnungsposition noch kein Eingriff der Öffnungsstellungsaritiermittel 30 erforderlich. Nur bei einem Ausfall oder bei einer Abnutzung des Puffers 19 wird auf die Öffnungsstellungsaritiermittel 30 automatisch zurückgegriffen werden.

Wie bereits im Zusammenhang mit der Übersicht gemäß Fig. 13 erläutert, ist der Connector 10 mit Kartenvorspannfedermitteln 22 ausgestattet. Diese Kartenfedervorspannmittel 22 umfassen die in den Fig. 1 bis 4 sowie 5 bis 8 zusammengedrückt dargestellte Feder 22, die sich um zum einen an einer an der Schublade 12 ausgebildeten Abstützung 80 und zum anderen an dem bereits erwähnten Kartenanlageelement 23, welches hin- und herbeweglich in der Schublade 12 geführt ist, abstützt. Das Kartenanlageelement 23 bildet eine Anlagefläche 24 für das in den Connector 10 eingesetzte Ende der Karte 9. Bei eingesetzter Karte 9 drückt die Feder 22, wie in den Fig. 2 bis 4 gezeigt, die Karte 9 mit ihrem vorderen Ende gegen eine von der Frontblende 17 gebildete Anlagefläche 82 (Fig. 3).

Die Karte sitzt also, wie in den Fig. 1 bis 4 gezeigt, im geschlossenen Zustand des Smart Card Connectors 10 federbelastet in einer an der Oberseite der Schublade 12 gebildeten Ausnehmung 85 (Fig. 10 und 11) und wird durch die Feder 22 federbelastet (Fig. 2 und 6) gegen die Anlagefläche 82 gedrückt. Dies gilt auch für die in den Fig. 5 bis 8 gezeigte Öffnungsstellung. Erst dann, wenn ein Benutzer mit einem Finger durch eine Aussparung 74 (Fig. 1) in der Schublade 12 greifend die federbelastete Karte 9 leicht anhebt, wird diese durch die Feder 22 soweit ausgeworfen oder ausgeschoben, dass sie leicht mit den Fingern aus der Schublade 12 entnommen werden kann. Dabei nimmt dann die Feder 22 ihren in den Fig. 9 bis 12 gezeigten entlasteten Zustand an.

Wie bereits bemerkt, veranschaulicht der Zustand des Smart Card Connectors 10 gemäß den Fig. 9 bis 12 auch den Zustand, wo die Karte 9 eingesetzt wird, wobei dann beim Hineinschieben der Karte 9 die Feder 22 vorgespannt wird, so dass die Karte 9 mit ihrem linken oder vorderen Ende zur Anlage an die Anlagefläche 82 gedrückt wird, worauf dann die Schublade 12 entgegen der Kraft der Schubladenvorspannmittel 28 in die Gehäuseplatte 11 eingeschoben wird. Die in Fig. 13 angedeuteten Schubladenvorspannfedermittel 28 sind in den Fig. 1 bis 12 nicht gezeigt, sie sind aber in der Form von zwei Federn vorhanden, die sich jeweils an der Gehäuseplatte 11 und der Schublade 12 abstützen. Eine der beiden Federn kann beispielsweise unterhalb des zungenförmigen Schubladenteils 88 (Fig. 1) angeordnet sein. Eine weitere Feder ist symmetrisch zur Mittellinie 100 vorgesehen.

Zusammenfassend kann man sagen, dass der Smart Card Connector 10 in seinem geschlossenen Zustand durch eine dichte Frontblende 17 zugriffsicher abgeschlossen ist. Ferner ist vorgesehen, dass sich die Schublade 12 in Folge der Wirkung des Puffers 19 bzw. hilfsweise die Öffnungsstellungsaritiermittel 30 nur teilweise vorzugsweise in der Größenordnung von 15 mm (d. h. etwa 20% der Kartenlänge) öffnet, wobei ferner die Entnahme der Karte 9 durch den Kartenvorspannfedermittel 22 verwendenden Auswerf-Mechanismus erleichtert wird.

Vorzugsweise trägt die Gehäuseplatte 11 sämtliche Einzelteile, wie Schalter, Betätigungsmagnet und sonstige elektronische Komponenten, wobei die Schublade 12 praktisch an der Außenseite der Gehäuseplatte 11 geführt läuft.

Abschließend sei noch auf ein wichtiges Merkmal hingewiesen, welches darin besteht, dass sogenannte Höcker oder sich nach oben erstreckende Vorsprünge 200 vorgesehen sind, und zwar beispielsweise in Fig. 7. Diese Höcker sind an dem sich nach oben erstreckenden Teil des Stegs 54 ausgebildet und erstrecken sich nach oben in der gleichen Höhe wie sich der vordere Steg 53 nach oben erstreckt. Vorzugsweise sind zwei Höcker vorgesehen, die in etwa in der Nähe der Aussparung 74 angeordnet sind. Diese Höcker 200 ermöglichen, wie in den Fig. 10 und 11 gezeigt, ein Herausspringen der Karte 9 aus der Schublade, wenn beispielsweise ein Benutzer mit einem Finger durch die Aussparung 74 von unten drückend die Karte 9 anhebt, so dass diese in die in Fig. 10 gezeigte Position springt. Die Karte 9 springt also praktisch über die Oberkante der Schublade gebildet durch die Stege 53 und 54 hinaus.

Gemäß einer Weiterbildung der Erfindung könnte die gesamte Frontblende 17 zusammen mit der Dichtung aus einem Elastomer ausgebildet sein. Wie bereits oben erwähnt, besteht der Puffer 19 vorzugsweise aus einem Elastomer, beispielsweise Gummi. Ferner sei darauf hingewiesen, dass, nicht wie in der Zeichnung gezeigt, nur eine Dichtlippe 61 vorgesehen ist, sondern es können auch zwei oder mehrere Dichtlippen vorgesehen sein.

### Bezugszeichenliste

- 1: Gerät
- 9: Smart Card (Karte)
- 10: Smart Card Connector
- 11: plattenförmiges Gehäuse, Gehäuseplatte
- 12: Schublade
- 13: Gehäusefront
- 15: Öffnung, Einführschlitz
- 17: Frontblende
- 18: umlaufende Dichtung
- 19: Puffer
- 20: Unterseite der Schublade
- 21: Vertiefung
- 22: Kartenvorspannfedermittel
- 23: Kartenanlageelement
- 24: Kartenanlagefläche
- 25: Pfeil
- 28: Schubladenvorspannfedermittel
- 29: Pfeil
- 30: Öffnungsstellungsaritiermittel
- 31: Haken an Schublade
- 32: Hakenanlage an Gehäuse
- 40: Schließstellungsrastmittel
- 41: elektromagnetbetätigter Rastschieber
- 42: Rastausnehmung an Schublade
- 43: Gleitfläche an Gehäuse
- 50: Kanal
- 51: Kanal
- 52: Ausnehmung
- 53: Steg
- 54: Steg
- 56: Vertiefung
- 57: zentrale Spritzvertiefung
- 58: Anlagefläche
- 60: Verankerungsteil
- 61: Dichtlippe
- 63: Dichtfläche
- 64: Verankerungsteil
- 65: Anschlagteil bzw. Dämpfungsteil
- 70: Elektromagnet
- 73: Anschlagfläche
- 74: Aussparung
- 80: Schubladen..
- 82: Anlagefläche
- 85: Ausnehmung
- 88: Schubladenteil
- 100: Mittellinie
- 200: Höcker, Vorsprünge

## Patentansprüche

1. Smart Card Connector (10) mit einem stationär an einem Gerät (1) anbringbaren Gehäuse (11), in dem eine eine Smart Card aufnehmende Schublade (12) hin- und herbewegbar angeordnet ist,
wobei die Hin- und Herbewegung der Schublade zwischen einem offenen Zustand und einem geschlossenen Zustand erfolgen kann und im geschlossenen Zustand die Smart Card (9) nicht entnehmbar ist
**dadurch gekennzeichnet, dass** die Schublade (12) im geschlossenen Zustand gegenüber dem Gehäuse (11) durch eine Dichtung abgedichtet ist, dass die Dichtung an der Schublade befestigt ist, dass an der Schublade (12) eine Frontblende (17) vorgesehen ist,
dass die Frontblende (17) eine um ihren Umfang herum verlaufende Aussparung (52) aufweist und
dass die Dichtung (18) umlaufend in der Aussparung (52) angeordnet ist

2. Connector nach Anspruch 1, wobei das Gehäuse als plattenförmiges Gehäuse (11) ausgebildet ist, an dem die ebenfalls plattenförmige Schublade (12) hin- und herbewegbar geführt ist.

3. Connector nach Anspruch 1 oder 2, wobei die Dichtung (18) in der Form eines umlaufenden vorzugsweise aus Gummi bestehenden Dichtungselements vorgesehen sind.

4. Connector nach einem der vorhergehenden Ansprüche, wobei die Dichtung (18) unverlierbar eingespritzt ist.

5. Connector nach einem der vorhergehenden Ansprüche, wobei die Schublade (12) ein vorderes Ende (Frontende) aufweist, welches in dem offenen Zustand des Connectors vorzugsweise in einem beschränkten Maße aus der Gehäuseplatte (11) herausragt, und wobei die Schublade (12) ferner ein hinteres Ende besitzt, welches sowohl im offenen Zustand als auch im geschlossenen Zustand der Schublade (12) im Bereich der Gehäuseplatte (11) verbleibt, und wobei die Schublade (12) ferner Führungsmittel zur Zusammenarbeit mit am Gehäuse ausgebildeten Führungsmitteln aufweist.

6. Connector nach einem der vorhergehenden Ansprüche, wobei Schließstellungsrast- oder -verriegelungsmittel (40) vorgesehen sind, um die Schublade (12) an der Gehäuseplatte (11) im geschlossenen Zustand festzulegen.

7. Connector nach einem der vorhergehenden Ansprüche, wobei eine Auswerfereinrichtung (22, 23) innerhalb der Schublade (12) vorgesehen ist.

8. Connector nach Anspruch 7, wobei die Auswerferereinrichtung eine Feder (22) sowie ein Kartenanlageelement (23) aufweist, um die eingesetzte Karte (9) gegen eine Anlagefläche (24) ausgebildet an der Schublade (12) zu drücken.

9. Connector nach einem der vorhergehenden Ansprüche, wobei die Dichtung (18) in die Frontblende (17) eingespritzt ist.

10. Connector nach einem der vorhergehenden Ansprüche, wobei am Boden der Ausnehmung (52) eine Vertiefung (56) ausgebildet ist, in der die Dichtung (18) verankert ist, wobei sich von einem in der Vertiefung sitzende Verankerungsteil aus mindestens eine Dichtlippe (61) senkrecht weg erstreckt, um im geschlossenen Zustand mit ihrem freien Ende in Kontakt mit einer stationären Dichtfläche (63) zu kommen, die vorzugsweise an einer Gehäusefront (13) ausgebildet ist.

11. Connector nach einem der vorhergehenden Ansprüche, wobei zur Spritzgussherstellung der Dichtung (18) in der Schublade (12) Kanäle (50, 51) ausgebildet sind, die zur Zufuhr des die Dichtung (18) bildenden Materials dienen.

12. Connector nach einem der vorhergehenden Ansprüche, wobei an der Unterseite (20) der Schublade (12) vorzugsweise mittig ein Puffer (19) ausgebildet ist, der aus einem Elastomer, z. B. Gummi, besteht und den Öffnungsweg der Schublade (12) begrenzt, **dadurch, dass** der Puffer (19) nach Durchlaufen des gewünschten Öffnungswegs auf eine Anschrägfläche (73) auftrifft, die vorzugsweise an der Gehäusefront (13) oder irgendeinem anderen stationären. Bauteil ausgebildet ist.

13. Connector nach einem oder mehreren der vorhergehenden Ansprüche,
wobei der Öffnungsweg der Schublade etwa 20% der Kartenlänge beträgt.

14. Connector nach einem der vorhergehenden Ansprüche, **dadurch gekennzeichnet, dass** im Boden der Schublade eine Aussparung (74) ausgebildet ist, durch die ein Anheben der Karte (9) beispielsweise durch einen Finger eines Benutzers möglich ist, worauf die Auswerfereinrichtung (22, 23) die Karte über die Oberkante der Frontblende schiebt.

15. Connector nach einem der vorhergehenden Ansprüche, **dadurch gekennzeichnet, dass** die Frontblende gänzlich zusammen mit der Dichtung bzw. Dichtlippe aus Elastomer ausgebildet ist.

## Claims

1. A smart card connector (10) comprising a housing (11) adapted to be a stationarily mounted at an apparatus (1) and a drawer (12) reciprocably mounted in said housing and adapted to receive a smart card and wherein the movement of the drawer can occur between an open condition and a closed condition, and wherein, in the closed condition, the smart card (9) cannot be removed,
**characterized in that**
the drawer (12), in the closed condition, is sealed with respect to the housing (11) by means of a seal,
the seal is fixedly mounted at the drawer,
a front cover (17) is provided at the drawer (12),
the front cover (17) comprises at its circumference a recess (52), which extends around the circumference, and
the seal (18) extends circumferencely in the recess (52).

2. The connector of claim 1 wherein the housing is formed as a plate- or board-shaped housing (11) by means of which the drawer (12) is reciprocably guided, said drawer also being plate- or board-shaped.

3. The connector of claim 1 or 2 wherein the seal (18) is provided in the form of a circumferential sealing element, preferably made of rubber.

4. The connector of one of the preceding claims when the seal (18) is imbedded by molding and thus cannot be lost.

5. The connector of one of the preceding claims wherein the drawer (12) comprises a forward end (frontal end) which projects, in the open condition of the connector, preferably to a limited degree out of the housing (11), and wherein
the drawer (12) further comprises a rear end which remains, in the open condition as well as the closed condition of the drawer (12), within the area of the plate shaped housing (11) and wherein the drawer (12) further comprises guide means for cooperation with guide means formed at the housing.

6. The connector as set forth in one of the preceding claims wherein detent means or locking means (40) defining the closing position are provided so as to fixedly locate the drawer (12) in the closed condition at the plate shaped housing (11).

7. The connector as set forth in one of the preceding claims wherein an ejector apparatus (22, 23) is provided within the drawer (12).

8. The connector as set forth in claim 7 wherein the ejector apparatus comprises a spring (22) as well as a card abutment element (23) so as to press the inserted card (9) against an abutment surface (24) formed at the drawer (12).

9. The connector of one of the preceding claims wherein the seal (18) is mounted by injection molding in the front cover (17).

10. The connector as set forth in one of the preceding claims wherein
at the bottom of the recess a cut-out (56) is formed in which the seal (18) is anchored, and
at least one sealing lip (61) projects perpendicularly away from an anchoring part located in the cut-out, such that in the closed condition the sealing lip contacts a stationary sealing surface (63) which is preferably formed at a front (13) of the housing (11).

11. The connector as set forth in one of the preceding claims wherein for the purpose of injection molding of the seal (18), channels (50, 51) are formed in the drawer (12) said channels being adapted to supply the material forming the seal (18).

12. The connector as set forth in one of the preceding claims wherein
at a bottom side (20) of the drawer (12), preferably in the middle thereof, a buffer (19) is formed which consists of an elastomer, for instance rubber, and which limits the opening path of the drawer such that after the desired opening path is passed the buffer (19) abuts at an abutment surface (73) which is preferably formed at the front (13) of the housing or some other stationary element.

13. The connector as set forth in one or more of the preceding claims, wherein the opening path of the drawer is about 20% of the length of the card.

14. The connector as set forth in one of the preceding claims **characterized in that** in the bottom of the drawer a cut-out (74) is provided, which allows lifting of the card (9), for instance by means of the finger of a user, whereupon the ejector apparatus (22, 23) moves the card over the upper edge of the front cover.

15. The connector as set forth in one of the preceding claims **characterized in that** the front cover and the seal and sealing lip are integrally made of an elastomeric material.

## Revendications

1. Connecteur pour carte à puce (10) comprenant un boîtier (11) apte à être monté de façon fixe dans un dispositif (1) et un tiroir (12) monté pour aller et venir dans le boîtier, et apte à recevoir une carte à puce, et dans lequel le mouvement du tiroir peut se faire entre un état ouvert et un état fermé, et dans lequel, dans l'état fermé, la carte à puce (9) ne peut pas être retirée,
**caractérisé en ce que :**
le tiroir (12), dans l'état fermé, est rendu étanche par rapport au boîtier (11) au moyen d'un joint,
le joint est monté de façon fixe sur le tiroir,
un couvercle frontal (17) est prévu au niveau du tiroir (12),
le couvercle frontal (17) comprend au niveau de sa périphérie une gorge (52), qui s'étend autour de la périphérie, et
le joint (18) s'étend de façon périphérique dans la gorge (52).

2. Connecteur selon la revendication 1, dans lequel le boîtier a la forme d'une plaque ou d'un plateau (11) au moyen duquel le tiroir (12) est guidé pour aller et venir, le tiroir ayant aussi la forme d'une plaque ou d'un plateau.

3. Connecteur selon la revendication 1 ou 2, dans lequel le joint (18) est prévu sous la forme d'un élément d'étanchéité périphérique, de préférence fabriqué en caoutchouc.

4. Connecteur selon l'une quelconque des revendications précédentes, dans lequel le joint (18) est intégré par moulage et ainsi ne peut être perdu.

5. Connecteur selon l'une quelconque des revendications précédentes, dans lequel le tiroir (12) comprend une extrémité dirigée vers l'avant (extrémité frontale) qui fait saillie, dans l'état ouvert du connecteur, de préférence dans une mesure limitée par rapport au boîtier (11), et dans lequel
le tiroir (12) comprend en outre une extrémité arrière qui reste, dans l'état ouvert aussi bien que dans l'état fermé du tiroir (12), à l'intérieur de la zone du boîtier en forme de plaque (11) et dans lequel le tiroir (12) comprend en outre des moyens de guidage pour coopérer avec des moyens de guidage formés au niveau du boîtier.

6. Connecteur selon l'une quelconque des revendications précédentes, dans lequel des moyens d'encliquetage ou des moyens de verrouillage (40) définissant la position fermée sont prévus de façon à positionner le tiroir (12) de façon fixe dans l'état fermé au niveau du boîtier en forme de plaque (11).

7. Connecteur selon l'une quelconque des revendiçations précédentes, dans lequel un dispositif d'éjection (22, 23) est prévu dans le tiroir (12).

8. Connecteur selon la revendication 7, dans lequel le dispositif d'éjection comprend un ressort (22) ainsi qu'un élément de butée de carte (23) afin de presser la carte insérée (9) contre une surface de butée (24) formée au niveau du tiroir (12).

9. Connecteur selon l'une quelconque des revendications précédentes, dans lequel le joint (18) est monté par moulage par injection dans le couvercle frontal (17).

10. Connecteur selon l'une quelconque des revendications précédentes, dans lequel au niveau du bas de la gorge est formée une découpe (56) dans laquelle le joint (18) est ancré, et
au moins une lèvre d'étanchéité (61) fait saillie perpendiculairement par rapport à une partie d'ancrage située dans la découpe, de sorte que dans l'état fermé la lèvre d'étanchéité est en contact avec une surface d'étanchéité fixe (63) qui est formée de préférence au niveau d'une partie avant (13) du boîtier (11).

11. Connecteur selon l'une quelconque des revendications précédentes, dans lequel dans le but de mouler le joint (18) par injection, des canaux (50, 51) sont formés dans le tiroir (12), les canaux étant aptes à fournir le matériau formant le joint (18).

12. Connecteur selon l'une quelconque des revendications précédentes, dans lequel au niveau d'un côté inférieur (20) du tiroir (12), de préférence au milieu de celui-ci, est formé un tampon (19) qui est constitué d'un élastomère, par exemple du caoutchouc, et qui limite le trajet d'ouverture du tiroir de sorte qu'après le parcours du trajet d'ouverture souhaité, le tampon (19) bute au niveau d'une surface de butée (73) qui est formée de préférence au niveau de la partie avant (13) du boîtier ou d'un autre élément fixe.

13. Connecteur selon l'une quelconque des revendications précédentes, dans lequel le trajet d'ouverture du tiroir a une longueur égale à environ 20 % de la longueur de la carte.

14. Connecteur selon l'une quelconque des revendiçations précédentes, **caractérisé en ce que**, dans le bas du tiroir, est prévue une découpe (74) qui permet de soulever la carte (9), par exemple au moyen du doigt d'un utilisateur, d'où il résulte que le dispositif d'éjection (22, 23) déplace la carte au-dessus du bord supérieur du couvercle frontal.

15. Connecteur selon l'une quelconque des revendiçations précédentes, **caractérisé en ce que** le couvercle frontal, le joint et la lèvre d'étanchéité sont fabriqués intégralement en un matériau élastomère.
